# FASCICULE DE BREVET EUROPEEN

(11) **EP 0 626 733 B1**
(45) Date de publication et mention de la délivrance du brevet: **28.10.1998**
(21) Numéro de dépôt: 94401155.0
(22) Date de dépôt: 25.05.1994
(51) Int. Cl.: H01M 2/26, B23K 20/16

(54) **Procédé de liaison d'une connexion métallique sur une électrode dont l'âme à une structure fibreuse ou de type mousse pour générateur électrochimique, et électrode obtenue**
Verfahren zum Verbinden eines metallischen Ableiters an eine Faser- oder Schaumgerüst als Trägerteil enthaltende Elektrode für einen elektrochemischen Generator und bei diesem Verfahren enthaltene Elektrode
Method for joining a metallic current collector to an electrode comprising a fibrous or a spongeous supporting structure for electrochemical generator and electrode obtained thereby

(30) Priorité: 26.05.1993 FR 9306314
(43) Date de publication de la demande: 30.11.1994
(73) Titulaire: ALCATEL ALSTHOM COMPAGNIE GENERALE D'ELECTRICITE, 75008 Paris (FR)
(72) Inventeur: Loustau, Marie-Thérèse, F-33000 Bordeaux (FR); Verhoog, Roelof, F-33200 Bordeaux (FR); Precigout, Claude, F-33310 Lormont (FR)
(74) Mandataire: Laroche, Danièle

(56) Documents cités:
- EP-A- 0 490 316
- FR-A- 2 111 024
- GB-A- 2 200 068
- US-A- 3 055 963
- PATENT ABSTRACTS OF JAPAN, vol. 8, no. 221 (E-271)(1658), 09 octobre 1984
- PATENT ABSTRACTS OF JAPAN, vol. 10, no. 91 ((E-394)(2148), 09 avril 1986
- PATENT ABSTRACTS OF JAPAN, vol. 6, no. 103 (E-112)(981), 12 juin 1982

## Description

La présente invention concerne un procédé de liaison d'une connexion métallique sur une électrode, dont l'âme a une structure fibreuse ou de type mousse, pour générateur électrochimique, et notamment pour les batteries d'accumulateurs destinées aux applications industrielles et à la traction.

La mise en oeuvre d'âmes fibreuses ou en mousse pour ces applications est extrêmement intéressante, car elle entraîne une diminution importante du poids des batteries. Mais, en plus de sa légèreté, l'âme de l'électrode doit présenter une grande porosité, être conductrice et suffisamment résistante mécaniquement au niveau de sa liaison avec sa connexion électrique, qui est un conducteur métallique rigide, par exemple un feuillard d'acier.

Cette liaison s'effectue généralement par soudage. On applique le bord de l'âme sur la connexion et on la soude sous pression. La demande de brevet FR-A-2 604 302 et le brevet US-A-5 085 956 décrivent de tels procédés. Dans le cas d'une âme poreuse, la réalisation d'une telle soudure est facilitée par une modification de l'état de surface de la connexion. Le brevet FR-2 111 024 enseigne le dépôt de nickel fritté sur la face de la connexion accolée à l'âme.

On peut, selon une autre variante, mettre en oeuvre deux feuillards métalliques de part et d'autre d'un bord de l'âme de l'électrode et les souder électriquement.

On constate que de telles solutions ne donnent pas satisfaction au niveau des performances électriques et mécaniques de l'électrode.

La présente invention a pour but de proposer un procédé perfectionné permettant d'améliorer nettement ces performances.

La présente invention a pour objet un procédé de liaison d'une connexion métallique sur une électrode, dont l'âme a une structure fibreuse ou de type mousse, pour générateur électrochimique, procédé selon lequel on applique sur un bord de ladite âme au moins un feuillard métallique, et on soude avec compression ledit feuillard et ladite âme appelée principale, procédé caractérisé par le fait que, préalablement à la soudure, on dispose au moins au droit de la zone de soudure une pièce supplémentaire dénommée âme de maintien de nature analogue à celle de ladite âme principale.

Selon une première variante ledit feuillard métallique est intercalé entre ladite âme principale et ladite âme de maintien.

Selon une seconde variante on met en oeuvre deux feuillards métalliques de part et d'autre de l'ensemble formé par ladite âme principale et ladite âme de maintien.

De préférence la hauteur de feuillard métallique solidarisée auxdites âmes est inférieure à la moitié de la hauteur de ladite âme de maintien.

Avec l'une ou l'autre de ces variantes, selon un premier mode de réalisation d'une électrode selon l'invention, ladite liaison de la connexion est effectuée préalablement à l'introduction de la matière électrochimiquement active dans ladite âme principale et ladite âme de maintien, opération suivie d'une compression globale de mise à une épaisseur prédéterminée de ladite électrode.

Selon un second mode de réalisation d'une électrode selon l'invention, on commence par lier entre elles par compression ladite âme principale et ladite âme de maintien, puis on introduit dans cet ensemble de la matière électrochimiquement active électriquement conductrice, on effectue une compression globale pour une mise à épaisseur prédéterminée de ladite électrode, et on réalise ladite soudure de la connexion.

Dans le cas où la matière électrochimiquement active n'est pas conductrice, cette dernière n'est pas introduite dans l'âme principale et l'âme de maintien au niveau de la zone de soudure de ladite connexion.

Afin d'accroître encore l'ancrage entre l'âme principale et l'âme de maintien, on prévoit dans l'une ou l'autre desdites âmes plusieurs perforations, par exemple, de diamètre compris entre 2 et 8 mm, avec un pas compris entre 5 et 50 mm. Après compression, il y a imbrication des deux âmes.

On peut également améliorer cet ancrage en solidarisant préalablement l'âme principale et l'âme de maintien par une soudure par points, électrique ou par ultra-sons.

Les matières électrochimiquement actives peuvent être choisies par exemple parmi l'hydroxyde de nickel, les alliages hydrurables, le carbone, l'oxyde de cadmium, l'oxyde de zinc, l'hydroxyde de zinc, l'oxyde d'argent...Les additifs classiques sont ajoutés à ces différentes matières actives.

Le matériau de ladite âme principale et de ladite âme de maintien peut être choisi parmi une mousse de nickel, une mousse d'acier nickelé, un feutre de polyuréthane nickelé ou argenté.

Avantageusement, ledit feuillard est en acier nickelé avec une épaisseur comprise entre 0,05 et 1 mm ; ladite âme principale et ladite âme de maintien sont en mousse de nickel avec un grammage compris entre 200 g/m² et 2000 g/m², l'épaisseur initiale étant comprise entre 0,5 mm et 5 mm pour l'âme principale, et entre 0,5 mm et 5 mm pour l'âme de maintien; de préférence le grammage est de l'ordre de 500 g/m² et l'épaisseur initiale de l'âme principale et de l'âme de maintien est de 1,7 mm.

Lorsque les sollicitations mécaniques de la connexion sont destinées à être particulièrement importantes, il est préférable de choisir pour l'âme de maintien un grammage supérieur à celui de l'âme principale. Ainsi, ladite âme principale est en mousse de nickel avec un grammage compris entre 500 g/m² et 900 g/m², et une épaisseur initiale comprise entre 1,4 mm et 2,5 mm, et ladite âme de maintien est en mousse de nickel avec un grammage compris entre 500 g/m² et 1500 g/m² et une épaisseur initiale comprise entre 1,4 mm et 2,5 mm.

La présente invention a aussi pour objet une électrode pour générateur électrochimique comprenant une âme principale fibreuse ou de type mousse et un feuillard métallique soudés ensemble, caractérisée en ce que ladite électrode comporte en outre une pièce supplémentaire dénommée âme de maintien, de même nature que ladite âme principale et disposée au moins au droit de la zone de soudure, de telle sorte que l'épaisseur totale de ladite âme principale et de ladite âme de maintien soit celle prédéterminée de ladite électrode.

D'autres caractéristiques et avantages de la présente invention apparaîtront au cours de la description suivante de modes de réalisation donnés à titre illustratif mais nullement limitatif.

Dans le dessin annexé :
- La figure 1 est une vue schématique en perspective d'une électrode ne faisant pas partie de l'invention.
- La figure 2A est une vue partielle très schématique éclatée en coupe transversale d'une âme principale, d'une âme de maintien et de deux feuillards destinés à la réalisation d'une électrode selon l'invention.
- La figure 2B montre en perspective très schématiquement l'électrode de la figure 2A après sa liaison avec sa connexion selon l'invention.
- Les figures 3A et 3B sont analogues aux figures 2A et 2B pour une variante de réalisation à un seul feuillard.
- Les figures 4A et 4B montrent respectivement en perspective éclatée et en coupe une liaison perfectionnée entre une âme principale et une âme de maintien destinées à une électrode selon l'invention.
- La figure 5 montre schématiquement en perspective un autre mode de liaison perfectionné entre une âme principale et une âme de maintien destinées à une électrode selon l'invention.
- La figure 6 montre schématiquement en perspective une autre variante d'électrode obtenue par la mise en oeuvre du procédé selon l'invention.

### Exemple I

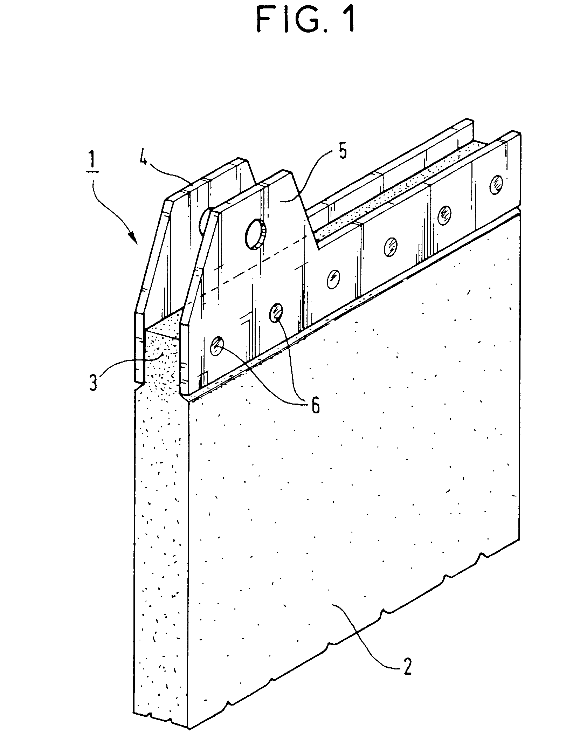

On a représenté dans la figure 1 une électrode 1 ne faisant pas partie de la présente invention. Elle comporte une âme 2 en mousse de nickel d'épaisseur initiale 1,7 mm et de grammage 500 g/m².
On a introduit dans cette âme de l'hydroxyde de nickel sauf dans la zone 3 où aura lieu la liaison avec la connexion. L'âme 2 empâtée est comprimée jusqu'à une épaisseur de 1 mm. On applique ensuite de part et d'autre de la zone 3 de l'âme 2, et suivant toute la largeur de l'électrode, des feuillards métalliques 4 et 5 en acier nickelé, d'épaisseur 0,1 mm. Ces feuillards et la zone 3 sont comprimés et soudés par points (on a référencé 6 les points de soudure). L'électrode 1 a une largeur de 70 mm et une hauteur de 150 mm.

### Exemple II

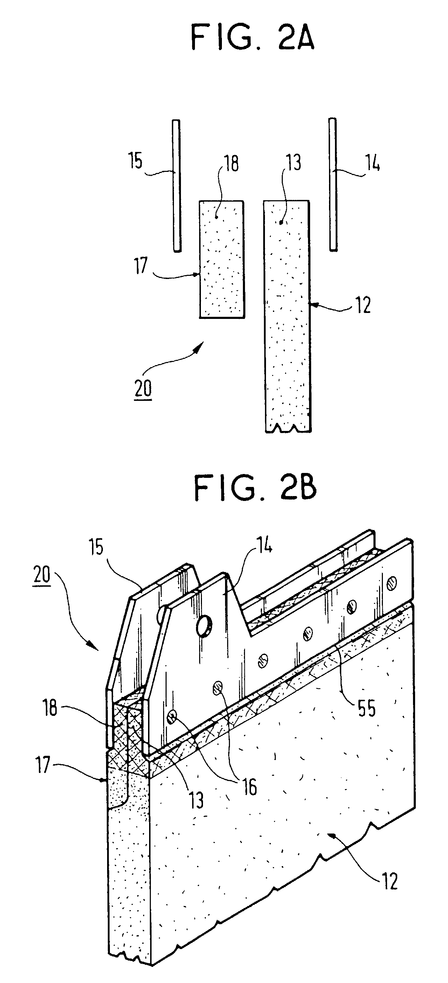

Dans un mode de réalisation selon l'invention visible dans les figures 2A et 2B, on retrouve une âme principale 12 analogue à l'âme 2 et deux feuillards métalliques 14 et 15 analogues aux feuillards 4 et 5 ; mais on dispose entre le feuillard 15 et l'âme principale 12, au droit de la zone de soudure prévue pour la connexion, suivant toute la largeur de l'électrode, une âme de maintien 17 en mousse de nickel d'épaisseur initiale 1,7 mm et de grammage 500 g/m².
La hauteur de la partie 18 de l'âme de maintien 17 qui sera impliquée dans la soudure est de l'ordre du tiers de la hauteur totale de cette âme de maintien (qui est par exemple de 20 mm pour une électrode de hauteur 150 mm).
On réalise la connexion par soudure par points (références 16). On introduit de la matière électrochimiquement active (hydroxyde de nickel) dans les âmes 12 et 17 sauf dans les zones de soudure 13 et 18 et on comprime l'ensemble jusqu'à une épaisseur finale d'électrode 20 égale à 1 mm.

### Exemple III

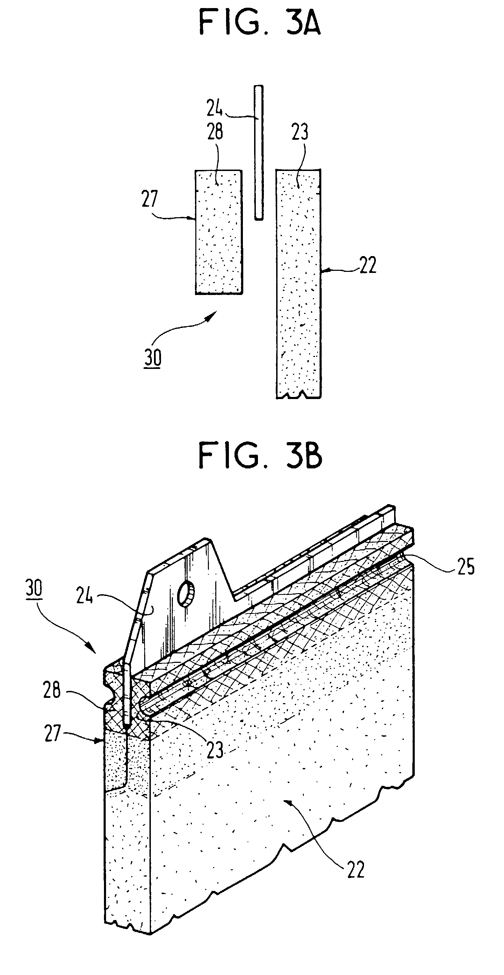

Les figures 3A et 3B montrent une variante de réalisation d'une électrode selon l'invention.
L'âme principale 22 en mousse de nickel d'épaisseur initiale 1,7 mm et de grammage 500 g/m² est associée à une âme de maintien 27 analogue à l'âme 17 et à un feuillard 24 analogue aux feuillards 14 et 15 précités, mais d'épaisseur 0,2 mm. Après compression, la connexion est réalisée par une soudure électrique à la molette schématisée par la ligne 25. On empâte comme précédemment les âmes 22 et 27 avec de l'hydroxyde de nickel, sauf dans les zones 23 et 28 impliquées dans la soudure.
L'ensemble subit alors une compression jusqu'à l'obtention d'une électrode 30 d'épaisseur égale à 1 mm.

On effectue sur les trois électrodes précédentes de mêmes dimensions (Exemples I à III) trois types d'essais :
- Essai de traction à la vitesse de 5 mm par minute : on mesure l'effort de rupture en decaNewtons.
- Résistance à la flexion alternée ; on maintient l'électrode à l'horizontale et on la fait tourner autour d'un axe horizontal perpendiculaire à la connexion ; on compte le nombre de tours aboutissant à la rupture de la connexion.
- Impédance, c'est-à-dire le rapport entre la tension et l'intensité mesurées à un taux de décharge de 35 % ; elle représente la résistance électrique de l'électrode en milliohms.

Le tableau I consigne les résultats des différents essais.

**TABLEAU I**

| | Effort de rupture daN | Nombre de tours | Impédance mohm |
|---|---|---|---|
| Exemple I | 4,1 | 2 | 8,3 |
| Exemple II | 13 | 28 | 4,4 |
| Exemple III | 11 | > 50 | 3,6 |

Ce tableau montre très clairement les progrès apportés par la mise en oeuvre du procédé selon l'invention.

En outre on peut remarquer que le feuillard central de l'exemple III est interne à l'électrode, et ne risque pas d'endommager les séparateurs situés de part et d'autre de cette électrode dans l'accumulateur ; des courts-circuits peuvent ainsi être évités.
Dans cette variante, si la matière électrochimiquement active est conductrice, il est possible d'empâter les zones 23 et 28 des âmes 22 et 27 avant la réalisation de la connexion. Une capacité optimale de l'électrode peut donc être ainsi obtenue.

Dans les exemples précédents, l'âme de maintien et l'âme principale étaient en mousses de nickel identiques. Mais, suivant la caractéristique optimale recherchée, il est possible de faire varier l'épaisseur et le grammage des mousses choisies, dans les limites indiquées plus haut.

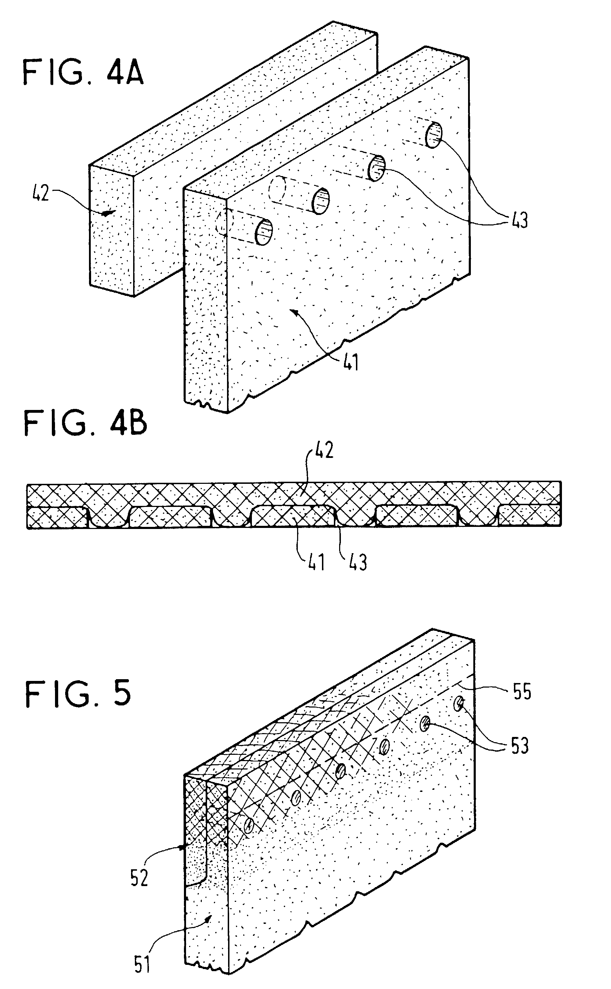

Les figures 4A et 4B montrent un perfectionnement au procédé selon l'invention selon lequel, avant toute opération on réalise un ancrage de l'âme de maintien 42 dans l'âme principale 41.
Pour cela, dans la mousse de nickel de l'âme principale 41, d'épaisseur initiale 1,7 mm et de grammage 500 g/m² on prévoit des trous 43 de diamètre 6 mm, avec un pas de 15 mm. Le diamètre des trous peut varier entre 2 et 8 mm et le pas entre 5 et 50 mm. L'âme de maintien 42 a initialement les mêmes caractéristiques que l'âme principale 41. Après compression, il y a imbrication des deux âmes, comme le montre la figure 4B en coupe schématique.

La figure 5 montre un autre moyen d'ancrage des âmes 51 et 52 respectivement analogues aux âmes 41 et 42. On effectue une compression initiale et une soudure par points; le diamètre des points de soudure 53 est de 2 mm et peut varier entre 1 et 4 mm ; le pas de ces points est de 15 mm et peut varier entre 5 et 50 mm.
La ligne de ces points de soudure se trouve au dessous de la zone de soudure de la connexion. Pour mieux illustrer cette disposition on a référencé la ligne 55 qui correspond au bord du feuillard 14 de la figure 2B.

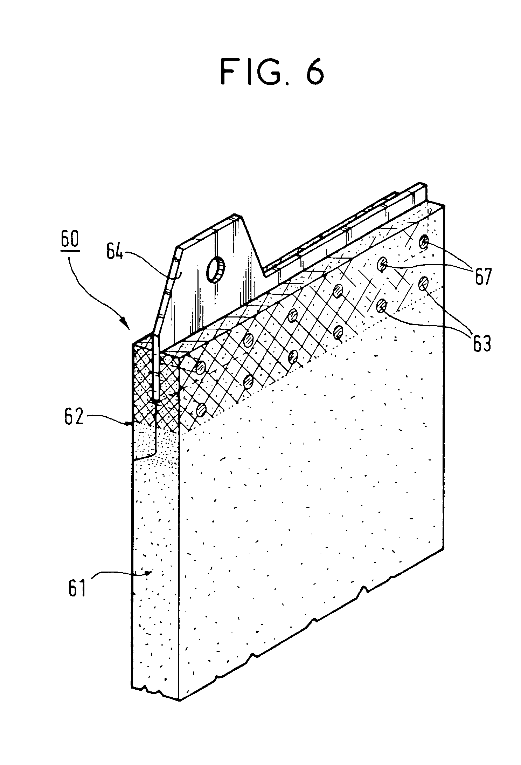

La figure 6 montre une variante de réalisation d'une électrode 60 obtenue par la mise en oeuvre du procédé selon l'invention. Dans cette variante l'électrode 60 comporte un feuillard central 64 analogue au feuillard 24 de l'électrode de la figure 3B. Les âmes 61 et 62 sont analogues aux âmes 51 et 52 de la figure 5, et on intercale entre elles le feuillard central 64. On effectue une compression, une soudure par points 63 des deux âmes entre elles, une soudure par points 67 des deux âmes avec le feuillard. L'électrode est ensuite empâtée sur toute sa hauteur, puis comprimée.

Bien entendu l'invention n'est pas limitée aux seuls exemples donnés. On pourra, notamment sans sortir du cadre de l'invention, modifier l'ordre des opérations de fabrication de l'électrode, les paramètres des structures des âmes, remplacer des mousses par des feutres. Par ailleurs, la connexion et l'âme de maintien peuvent être appliquées sur une partie seulement de la largeur de l'électrode. De préférence cette partie sera au moins égale à la moitié de la largeur de l'électrode.

## Revendications

1. Procédé de liaison d'une connexion métallique sur une électrode dont l'âme a une structure fibreuse ou de type mousse pour générateur électrochimique, procédé selon lequel on applique sur un bord de ladite âme au moins un feuillard métallique et on soude avec compression ledit feuillard et ladite âme appelée principale, procédé caractérisé par le fait que, préalablement à la soudure, on dispose au moins au droit de la zone de soudure une pièce supplémentaire dénommée âme de maintien de nature analogue à celle de ladite âme principale.

2. Procédé de liaison d'une connexion métallique sur une électrode selon la revendication 1, caractérisé par le fait que ledit feuillard métallique est intercalé entre ladite âme principale et ladite âme de maintien.

3. Procédé de liaison d'une connexion métallique sur une électrode selon la revendication 1, caractérisé par le fait que l'on met en oeuvre deux feuillards métalliques de part et d'autre de l'ensemble formé par ladite âme principale et ladite âme de maintien.

4. Procédé de liaison d'une connexion métallique sur une électrode selon l'une des revendications 1 à 3, caractérisé par le fait que ladite liaison est effectuée préalablement à l'introduction de la matière électrochimiquement active dans ladite âme principale et ladite âme de maintien, opération suivie d'une compression globale de mise à une épaisseur prédéterminée de ladite électrode.

5. Procédé de liaison d'une connexion métallique sur une électrode selon l'une des revendications 1 à 3, caractérisé par le fait que l'on commence par lier entre elles par compression ladite âme principale et ladite âme de maintien, puis on introduit dans cet ensemble de la matière électrochimiquement active électriquement conductrice, on effectue une compression globale pour une mise à épaisseur prédéterminée de ladite électrode, et on réalise ladite soudure de la connexion.

6. Procédé de liaison d'une connexion métallique sur une électrode selon l'une des revendications 1 à 3, caractérisé par le fait que l'on commence par lier entre elles par compression ladite âme principale et ladite âme de maintien, puis on introduit dans cet ensemble, sauf au niveau de la zone de soudure de ladite connexion, de la matière électrochimiquement active non conductrice, on effectue une compression globale pour une mise à épaisseur prédéterminée de l'électrode, et on réalise ladite soudure de la connexion.

7. Procédé de réalisation selon l'une des revendications 4 à 6, caractérisé par le fait que, pour accroître l'ancrage entre ladite âme principale et ladite âme de maintien, on prévoit dans l'une ou l'autre desdites âmes plusieurs perforations de diamètre compris entre 2 et 8 mm, avec un pas compris entre 5 et 50 mm.

8. Procédé de réalisation selon l'une des revendications 4 à 6, caractérisé par le fait que l'on accroît l'ancrage entre ladite âme principale et ladite âme de maintien par un soudage par points, électrique ou par ultra sons.

9. Procédé selon l'une des revendications 1 à 8, caractérisé par le fait que lesdites matières électrochimiquement actives sont choisies parmi l'hydroxyde de nickel, les alliages hydrurables, le carbone, l'oxyde de cadmium, l'oxyde de zinc, l'hydroxyde de zinc, l'oxyde d'argent.

10. Procédé selon l'une des revendications 1 à 8, caractérisé par le fait que le matériau de ladite âme principale et de ladite âme de maintien est choisi parmi une mousse de nickel, une mousse d'acier nickelé, un feutre de polyuréthane nickelé ou argenté.

11. Procédé selon l'une des revendications précédentes, caractérisé par le fait que ledit feuillard est en acier nickelé avec une épaisseur comprise entre 0,05 et 1 mm, que ladite âme principale et ladite âme de maintien sont en mousse de nickel avec un grammage compris entre 200 g/m² et 2000 g/m², l'épaisseur initiale étant comprise entre 0,5 mm et 5 mm pour l'âme principale et comprise entre 0,5 mm et 5 mm pour l'âme de maintien.

12. Procédé selon la revendication 11, caractérisé par le fait que ledit grammage est de l'ordre de 500 g/m² et que l'épaisseur initiale de l'âme principale et de l'âme de maintien est de 1,7 mm.

13. Procédé selon l'une des revendications 1 à 10, caractérisé par le fait que ledit feuillard est en acier nickelé avec une épaisseur comprise entre 0,05 mm et 1 mm, que ladite âme principale est en mousse de nickel avec un grammage compris entre 500 g/m² et 900 g/m², et une épaisseur initiale comprise entre 1,4 mm et 2,5 mm, et que ladite âme de maintien est en mousse de nickel avec un grammage compris entre 500 g/m² et 1500 g/m² et une épaisseur initiale comprise entre 1,4 mm et 2,5 mm.

14. Procédé selon l'une des revendications précédentes, caractérisé par le fait que la hauteur de feuillard métallique solidarisée auxdites âmes est inférieure à la moitié de la hauteur de ladite âme de maintien.

15. Electrode pour générateur électrochimique comprenant une âme principale fibreuse ou de type mousse et un feuillard métallique soudés ensemble, caractérisée en ce que ladite électrode comporte en outre une pièce supplémentaire dénommée âme de maintien, de même nature que ladite âme principale et disposée au moins au droit de la zone de soudure, de telle sorte que l'épaisseur totale de ladite âme principale et de ladite âme de maintien soit celle prédéterminée de ladite électrode.

## Patentansprüche

1. Verfahren zur Verbindung eines metallischen Ableiters mit einer Elektrode, deren Kern eine Faser oder Schaumstruktur aufweist, für einen elektrochemischen Generator, nach dem an einem Rand des Kerns wenigstens ein Metallband angebracht wird und das Band und der Hauptkern genannte Kern unter Zusammendrücken verschweißt werden, dadurch gekennzeichnet, daß vor dem Schweißen wenigstens gerade in der Schweißzone ein zusätzliches Teil, Haltekern genannt, mit einer Beschaffenheit angeordnet wird, die zu der des Hauptkerns analog ist.

2. Verfahren zur Verbindung eines metallischen Ableiters mit einer Elektrode nach Anspruch 1, dadurch gekennzeichnet, daß das Metallband zwischen den Hauptkern und den Haltekern eingefügt wird.

3. Verfahren zur Verbindung eines metallischen Ableiters mit einer Elektrode nach Anspruch 1, dadurch gekennzeichnet, daß zwei Metallbänder beiderseits der von dem Hauptkern und dem Haltekern gebildeten Anordnung ausgeführt werden.

4. Verfahren zur Verbindung eines metallischen Ableiters mit einer Elektrode nach einem der Ansprüche 1 bis 3, dadurch gekennzeichnet, daß die Verbindung vor der Einführung des elektrochemisch aktiven Materials in den Hauptkern und den Haltekern ausgeführt wird, dem Vorgang ein gesamtes Zusammendrücken folgt, um der Elektrode eine vorbestimmte Dicke zu geben.

5. Verfahren zur Verbindung eines metallischen Ableiters mit einer Elektrode nach einem der Ansprüche 1 bis 3, dadurch gekennzeichnet, daß mit dem Verbinden durch Zusammendrücken des Hauptkerns und des Haltekerns miteinander begonnen wird, dann in diese Anordnung elektrisch leitendes, elektrochemisch aktives Material eingeführt wird, ein gesamtes Zusammendrücken durchgeführt wird, um der Elektrode eine vorbestimmte Dicke zu geben, und die Verschweißung des Ableiters ausgeführt wird.

6. Verfahren zur Verbindung eines metallischen Ableiters mit einer Elektrode nach einem der Ansprüche 1 bis 3, dadurch gekennzeichnet, daß mit dem Verbinden durch Zusammendrücken des Hauptkerns und des Haltekerns miteinander begonnen wird, dann in diese Anordnung, außer in Höhe der Schweißzone für den Ableiter nichtleitendes, elektrochemisch aktives Material eingeführt wird, ein gesamtes Zusammendrücken durchgeführt wird, um der Elektrode eine vorbestimmte Dicke zu geben, und die Verschweißung des Ableiters ausgeführt wird.

7. Verfahren zur Ausführung nach einem der Ansprüche 4 bis 6, dadurch gekennzeichnet, daß, um die Verankerung zwischen dem Hauptkern und dem Haltekern zu steigern, in dem einen oder dem anderen der Kerne mehrere Löcher mit einem Durchmesser zwischen 2 und 8 mm mit einem Abstand zwischen 5 und 50 mm vorgesehen werden.

8. Verfahren zur Ausführung nach einem der Ansprüche 4 bis 6, dadurch gekennzeichnet, daß die Verankerung zwischen dem Hauptkern und dem Haltekern durch eine Elektro- oder Ultraschall-Punktschweißung gesteigert wird.

9. Verfahren nach einem der Ansprüche 1 bis 8, dadurch gekennzeichnet, daß die elektrochemisch aktiven Materialien aus Nickelhydroxid, den hydrierbaren Legierungen, Kohlenstoff, Cadmiumoxid, Zinkoxid, Zinkhydroxid, Silberoxid ausgewählt werden.

10. Verfahren nach einem der Ansprüche 1 bis 8, dadurch gekennzeichnet, daß das Material des Hauptkerns und des Haltekerns aus Nickelschaum, Schaum aus vernickeltem Stahl, Filz aus vernickeltem oder versilbertem Polyurethan ausgewählt werden.

11. Verfahren nach einem der vorhergehenden Ansprüche, dadurch gekennzeichnet, daß das Band aus vernickeltem Stahl mit einer Dicke zwischen 0,05 und 1 mm besteht, daß der Hauptkern und der Haltekern aus einem Nickelschaum mit einem Flächengewicht zwischen 200 g/m² und 2000 g/m² bestehen, wobei die Anfangsdicke zwischen 0,5 mm und 5 mm für den Hauptkern und zwischen 0,5 mm und 5 mm für den Haltekern beträgt.

12. Verfahren nach Anspruch 11, dadurch gekennzeichnet, daß das Flächengewicht in der Größenordnung von 500 g/m² liegt und daß die Anfangsdicke des Hauptkerns und des Haltekerns 1,7 mm beträgt.

13. Verfahren nach einem der Ansprüche 1 bis 10, dadurch gekennzeichnet, daß das Band aus vernickeltem Stahl mit einer Dicke zwischen 0,05 mm und 1 mm besteht, daß der Hauptkern aus einem Nickelschaum mit einem Flächengewicht zwischen 500 g/m² und 900 g/m² und einer Anfangsdicke zwischen 1,4 mm und 2,5 mm besteht, und daß der Haltekern aus einem Nickelschaum mit einem Flächengewicht zwischen 500 g/m² und 1500 g/m² und einer Anfangsdicke zwischen 1,4 und 2,5 mm besteht.

14. Verfahren nach einem der vorhergehenden Ansprüche, dadurch gekennzeichnet, daß die Höhe des Metallbandes, die mit den Kernen fest verbunden ist, geringer als die halbe Höhe des Haltekerns ist.

15. Elektrode für einen elektrochemischen Generator, die einen Hauptkern, der faserig oder vom Schaumtyp ist, und ein Metallband umfaßt, die zusammen verschweißt sind, dadurch gekennzeichnet, daß die Elektrode außerdem ein zusätzliches Teil, Haltekern genannt, aufweist, das die gleiche Beschaffenheit wie der Hauptkern hat und wenigstens gerade in der Schweißzone angeordnet ist, so daß die Gesamtdicke des Hauptkerns und des Haltekerns diejenige ist, die für die Elektrode vorbestimmt ist.

## Claims

1. A method of bonding a metal connection to an electrode including a core having a fiber or foam-type structure for an electrochemical cell, in which method at least one metal strip is pressed against one edge of said core and said strip and said "main core" are welded together under compression, said method being characterized by the fact that, prior to the welding, an additional part referred to as a "retaining core" of a type analogous to that of said main core is disposed at least in register with the welding region.

2. A method of bonding a metal connection to an electrode according to claim 1, characterized by the fact that said metal strip is interposed between said main core and said retaining core.

3. A method of bonding a metal connection to an electrode according to claim 1, characterized by the fact that two metal strips are used, one on each side of the assembly formed by said main core and by said retaining core.

4. A method of bonding a metal connection to an electrode according to any one of claims 1 to 3, characterized by the fact that said bonding is performed prior to pasting the electrochemically-active substance onto said main core and onto said retaining core, whereafter the entire electrode is compressed to a predetermined thickness.

5. A method of bonding a metal connection to an electrode according to any one of claims 1 to 3, characterized by the fact that firstly said main core and said retaining core are bonded together by compression, then an electrically-conductive electrochemically-active substance is pasted onto the resulting assembly, the entire electrode is compressed to a predetermined thickness, and the connection is welded to the electrode.

6. A method of bonding a metal connection to an electrode according to any one of claims 1 to 3, characterized by the fact that firstly said main core and said retaining core are bonded together by compression. then a non-conductive electrochemically-active substance is pasted onto the resulting assembly, except in the region to which said connection is to be welded, the entire electrode is compressed to a predetermined thickness, and the connection is welded to the electrode.

7. A method according to any one of claims 4 to 6, characterized by the fact that, to improve the fastening between said main core and said retaining core, a plurality of perforations of diameter lying in the range 2 mm to 8 mm are provided in either one of said cores at a pitch lying in the range 5 mm to 50 mm.

8. A method according to any one of claims 4 to 6, characterized by the fact that the fastening between said main core and said retaining core is improved by electrical or ultrasonic spot welding.

9. A method according to any one of claims 1 to 8, characterized by the fact that said electrochemically-active substances are chosen from nickel hydroxide, hydridable alloys, carbon, cadmium oxide, zinc oxide, zinc hydroxide, and silver oxide.

10. A method according to any one of claims 1 to 8. characterized by the fact that the material of said main core and of said retaining core is chosen from a nickel foam, a nickel-plated foam, and a nickel-plated or silver-plated polyurethane felt.

11. A method according to any preceding claim, characterized by the facts that said strip is made of nickel-plated steel having a thickness lying in the range 0.05 mm to 1 mm, and that said main core and said retaining core are made of nickel foam having a weight per unit area lying in the range 200 g/m² to 2,000 g/m², the initial thickness of the main core lying in the range 0.5 mm to 5 mm, and the initial thickness of the retaining core also lying in the range 0.5 mm to 5 mm.

12. A method according to claim 11, characterized by the facts that said weight per unit area is about 500 g/m², and that the initial thickness of the main core is 1.7 mm and the initial thickness of the retaining core is also 1.7 mm.

13. A method according to any one of claims 1 to 10, characterized by the facts that said strip is made of nickel-plated steel having a thickness lying in the range 0.05 mm to 1 mm, that said main core is made of nickel foam having a weight per unit area lying in the range 500 g/m² to 900 g/m², and an initial thickness lying in the range 1.4 mm to 2.5 mm, and that said retaining core is made of nickel foam having a weight per unit area lying in the range 500 g/m² to 1,500 g/m², and an initial thickness lying in the range 1.4 mm to 2.5 mm.

14. A method according to any preceding claim, characterized by the fact that the height of metal strip that is secured to said cores is less than half the height of said retaining core.

15. An electrode for an electrochemical cell comprising a fiber or foam-type main core and a metal strip welded thereto, the electrode being characterized in that it further includes an additional part referred to as a "retaining core" of the same type as said main core and disposed at least in register with the welding region, so that the total thickness of said main core and of said retaining core is that predetermined by said electrode.
